# EUROPEAN PATENT SPECIFICATION

(11) **EP 0 350 065 B1**
(45) Date of publication and mention of the grant of the patent: **09.02.1994**
(21) Application number: 89112478.6
(22) Date of filing: 07.07.1989
(51) Int. Cl.: G09D 3/12

(54) **Electronic apparatus having a calendar-display function**
Elektronisches Gerät mit einer Kalenderanzeigefunktion
Appareil électronique ayant une fonction d'affichage de calendrier

(30) Priority: 07.07.1988 JP 90085/88 U
(43) Date of publication of application: 10.01.1990
(73) Proprietor: CASIO COMPUTER COMPANY LIMITED, Shinjuku-ku Tokyo 160 (JP)
(72) Inventor: Ohtani, Yuji Pat. Dep., Dev. Div. Hamura R & D, Hamura-machi Nishitama-gun Tokyo 190-11 (JP)
(74) Representative: Grünecker, Kinkeldey, Stockmair & Schwanhäusser Anwaltssozietät

(56) References cited:
- EP-A- 0 123 084
- EP-A- 0 306 821
- GB-A- 2 077 465
- US-A- 4 274 146
- US-A- 4 353 178
- US-A- 4 712 923

## Description

The present invention relates to a small sized electronic apparatus having a day-counting function which is capable of displaying a calendar.

Recently, small sized electronic apparatuses such as, for example, electronic calculators having a day-counting function are available.

In these electronic calculators, when, for example, the date, i.e., month, day and year after 30 days from the present date are to be counted, data of the present date, i.e., "month", "day" and "year" in addition to "30" are input by key-operations and thereby the date, i.e., "month", "day" and "year" after 30 days from the present date are obtained.

There has been a disadvantage in operating these electronic calculators, however, that several and troublesome key operations are necessary to input required data, that is, key operations are necessary for two times, two times and four times to input data of "month", "day" and "year", respectively.

Further, since only numeral data are displayed on the electronic calculator, it is difficult to visually confirm which numerals correspond to the calendar data, such as "month", "day" and "year" data.

From US-A-4,353,178, a liquid crystal calendar display device is known presenting a full month of dates in a large-sized format. Sunday is thereby always located in the left or right column of the calendar regardless of the day which is the first date in the presented month.

It is an object of the present invention to provide a calendar display device which is easy to handle and which provides the user with additional information.

This object is solved by the subject matter of claim 1.

Other features and advantages of the present invention may be more fully understood from the following detailed description when taken in conjunction with the accompanying drawings.
Fig. 1 is a block diagram illustrating an electronic apparatus having a calendar-display function;
Fig. 2 is a view illustrating a construction of a calendar-memory;
Fig. 3 is a flow chart illustrating operations for setting a holiday;
Fig. 4 is a flow chart illustrating operations for counting days;
Fig. 5A to 5C are views illustrating examples of display of a display section; and
Fig. 6 is a block diagram of a calendar-display electronic apparatus having a tablet-input section.

### ARRANGEMENT OF ELECTRONIC APPARATUS

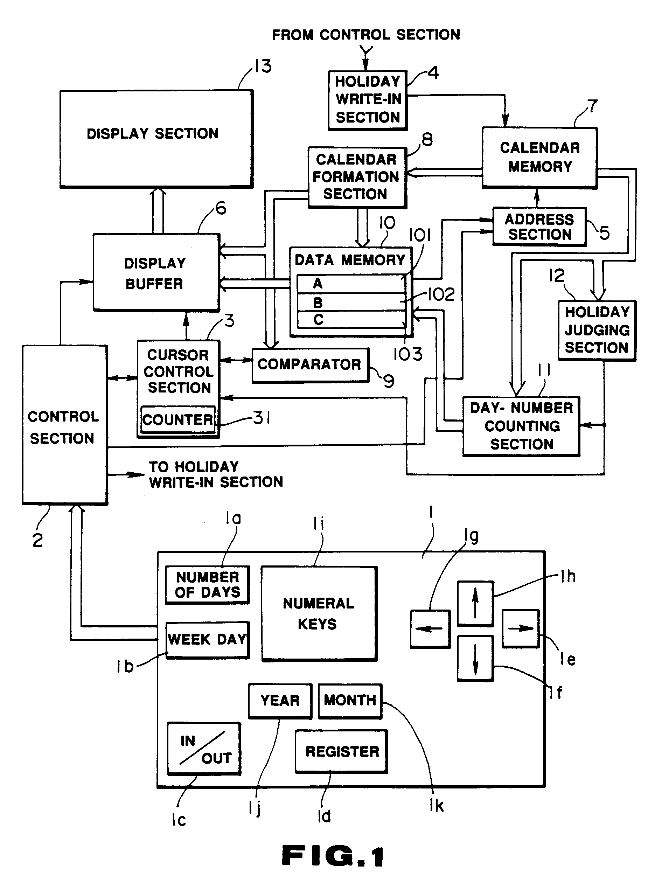

In Fig. 1, a numeral 1 stands for a key input section. The key input section 1 comprises a "day number" key 1a for designating a day-number counting mode, a "weekday" key 1b for designating a weekday-number counting mode, an "IN/OUT" key 1c for selecting an input mode or an output mode, a "register" key 1d for registering a particular day and a holiday, a cursor keys 1e through 1h, numeral keys 1i, a "year" key 1j and a "month" key 1 key.

Data input through the key input section 1 are delivered to a control section 2. The control section 2 comprises a ROM, where a program for controlling circuits has been stored. The control section 2 supplies control instructions to a cursor-control section 3, a holiday write-in section 4 and an address section 5. The control section 2 further supplies to a display buffer 6 data input through the key-input section 1.

The cursor-control section 3 supplies to the display buffer 6 its outputs corresponding to operations of the cursor keys 1e through 1h of the key-input section 1. The cursor-control section 3 has a counter 31 which counts dates. The holiday write-in section 4 seves to write holiday data into a calendar memory 7. The address section 5 serves to control addresses for "write-in" and "read-out" of the calendar memory 7.

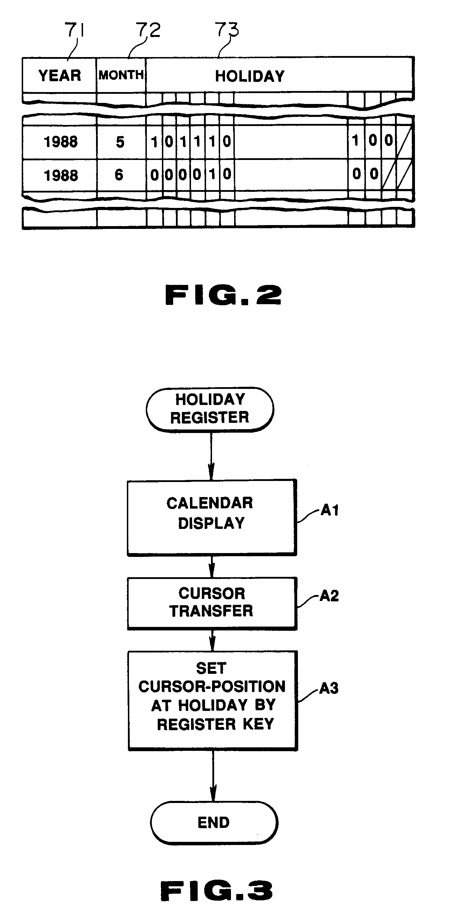

The calendar memory 7 comprises memory areas 71 through 73 as shown in Fig. 2. The memory area 71 stores year data of four digits, the memory area 72 stores month data from January to December relative to each year stored in the memory area 71 and the memory area 73 stores holidays in each month from January to December. The memory area 73 for storing holidays in each month consists of 4 bytes (32 bits) and one day corresponds to one bit. A value "1" is written in bit-positions corresponding to holidays through the holiday write-in section 4 by operating the key-input section 1. The value "1" may be previously written in bit-positions corresponding to Sundays and national holidays in the production line.

Data read out from the calendar memory 7 are supplied to a calendar-formation section 8. The calendar formation section 8 calculates day of the week of the first day in a month and number of days in the month from data such as year and month data read out from the calendar memory 7, and writes these calculated data, i.e., calendar data in the display buffer 6. The calendar-formation section 8 supplies last-day data in the month to a comparator 9 and calculates the dates corresponding to the bits designated in the calendar memory 7, and supplies the calculation result to a data memory 10. The comparator 9 compares the last day data of the month with a count value of a counter 31 in the cursor-control section 3 and, when the count value exceeds the last day data of the month, outputs an instruction so as to display the following month and resets contents of the counter 31. The data memory 10 comprises an A-register 101 in which a start-date data is written, a B-register 102 in which an end-date data is written and a C register 103 in which a data of number of days between the start-date and the end-date is written. The data memory 10 supplies the start-date data and the end-date data to the address section 5 and reads out the corresponding data from the calendar memory 7. The data read out from the calendar memory 7 are supplied to a day-number counting section 11 and a holiday-judging section 12. The day-number counting section 11 counts number of days between the start-date and the end-date read out from the calendar memory 7 and supplies the count-result to the date-memory 10. The holiday-judging section 12 judges a holiday from the data read out from the calendar memory 10 and supplies the judging result to the day-number counting section 11 and the cursor-control section 3.

A numeral 13 denotes a display section for indicating contents of the display buffer 6.

### OPERATION OF APPARATUS

Now, the operation of the embodiment constructed as mentioned above will be described.

At first, the operation for registering a holiday will be described referring to Fig. 3. An OUT mode is set by operation of the IN/OUT key or mode setting key 1c. When data, for example, "1988", "year" and "5", "month" are input by operation of the key-input section 1 at Step A1, calendar data of "May, 1988" are read out from the calendar memory 7. Then, these calendar data, such as "year" data and "month" data each are supplied to the calendar-formation section 8 and the day of the week of the first day in the month is calculated and number of days in the month (in this case, 31 days) is decided. The above results are written in the display buffer 6 and are displayed on the display section 13. In this case, since as illustrated in Fig. 2, Sundays and national holidays have been registered in the holiday-memory area 73 and the corresponding bits have been set at "1", the relavant displays are reversed.

An IN mode is designated by operation of the mode-setting key 1 under the above display state and the operation advances to Step A2 and wherein the cursor is moved by operation of the cursor keys 1e through 1h so as to designate a desired day to be registered as a holiday. And, as shown at Step A3, the "register" key 1d is depressed. Then, the holiday write-in section 4 sets the bit corresponding to the cursor position at the value "1", which bit is in the holiday write-in area 73 of the calendar memory 7, and thereby the holiday can be set.

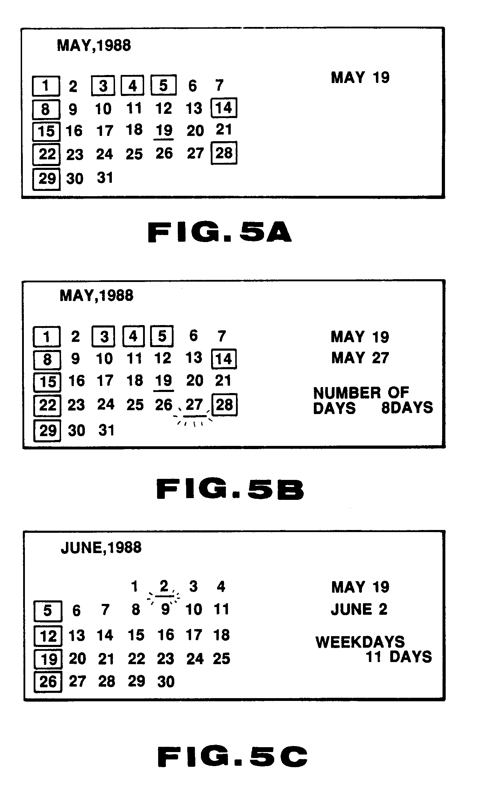

Fig. 5A is a view illustrating a calendar of May, 1988, in which 14th day and 28th day have been newly registered as holidays.

### DAY COUNTING PROCESS

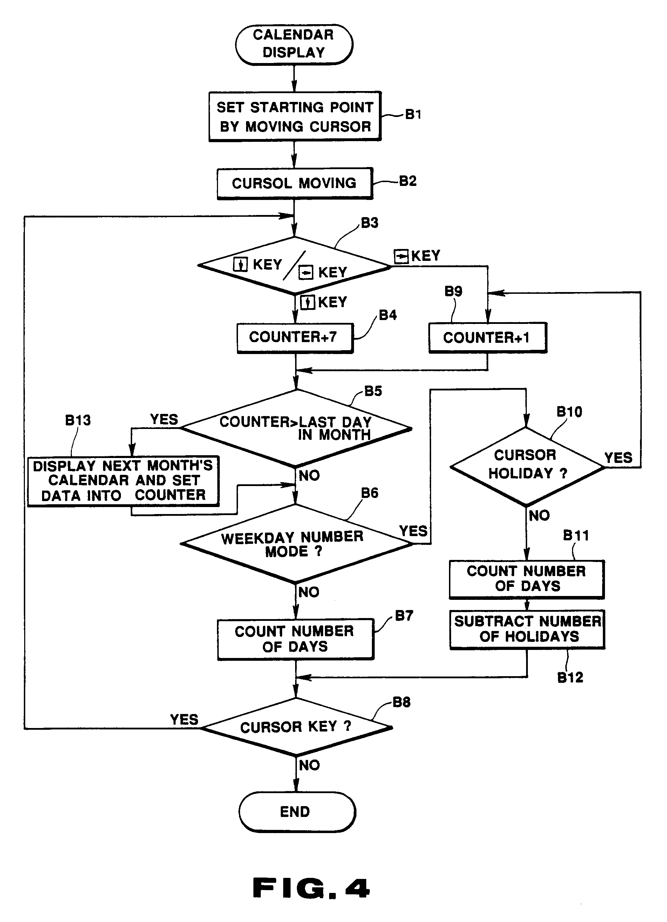

The operation for counting number of days will be described referring to Fig. 4. At first, the OUT mode is set by operation of the mode setting key 1c and also a day-number counting mode is set by operation of the "day-number" key 1a. At Step B1, a starting point is set by operation of the cursor. In this case, the cursol is moved by operation of the cursor keys 1e through 1h so as to designate a particular day, which is represented by the starting point of the cursor. In case that 19th day is set as the starting point, 19th day is designated by the cursor and in this state, the "register" key 1d is operated. Then 19th day is registered as the starting point, and a bar is displayed under 19th day and also the date, "May 19" are displayed at the side space of the calendar, as shown in Fig. 5A. In this case, the starting data, "May 19" are written in the A register 101 of the data memory 10 and the counter 31 of the cursol control section 3 is set at "19".

In this state, the cursor is moved at Step B2. In case number of days between 19th day and 27th day is obtained, the "↓" key 1f is operated and then " " key 1e is operated. These operations will be described in detail. When "↓" key 1f is operated, the operation advances to Step B4 through Step B3 and wherein the count value of the counter 31 in the cursor-control section 3 is added by "+7", resulting in "26". When the counter 31 has been set at "26", as described above, the address section 5 designates the bit of the calendar memory 7 corresponding to "26th day". The calendar-formation section 8 calculates "May 26" from the bit data and writes the data, "May 26" into the B register 102 of the data memory 10.

At Step B5, the comparator 9 compares the count value of the counter 31 with a value of the last day in the month, but the result of the comparation is "NO" in this case, so that the operation advances to Step B6. It is confirmed at Step B6 that the weekday-number counting mode is not set and therefore the result is "NO". The operation further advances to Step B7. At Step B7, the day-number counting section 11 counts bits of the calendar memory 7 on the basis of the contents of A-register 101 and the contents of B-register 102 of the data memory 10.

The above counting process is executed in the following manner. At first, 1 bit of the calendar memory 7 corresponding to a date stored in the A-register is designated and the 1 bit data is supplied to the day-number counting section 11. Bit data are sequentially supplied till the bit data corresponding to the date stored in the B-register 102 is designated. The day-number counting section 11 counts up number of the supplied data, no matter whether the supplied data is "0" or "1".

Accordingly, the counted number is the number of days between the two dates designated by the cursor and is written into the C-register. At this time, content of the C register is "7".

And when "→" key 1f is operated, the result of the processing at Step B8 becomes "YES" and the operation returns to Step B3. Then, the operation advances from Step B3 to Step B9 and the value "+1" is added to the count value of the counter 31 of the cursor control section 3 and the above count value becomes "27". The address section 5 designates a bit corresponding to "27th day" of calendar memory 7 in accordance with the above count value. The calendar-formation section 8 calculates "May 27" from the bit data and newly writes the "May 27" into the B-register 102 of the data memory 10.

Then, the operation advances to Steps B5 to B7. The day-number counting section 11 counts bits of the calendar memory 7 on the basis of the contents of the A-register 101 and the contents of the B-register 102 of the data memory 10 and writes the counting result into the C-register 103. At this time, the content of the C-register is "8" and is transferred through the display buffer 6 to the display section 13 to be displayed thereon. Fig. 5B is a view showing the display state of the display section 13, and "May 19", "May 27" and "8 days", the result of day-number counting including holidays are displayed on the display section 13 together with the calendar display.

### Days-of-week COUNTING PROCESS

A days-of-week-number counting operation will be described referring to Fig. 4. The OUT mode is set by operation of the mode-setting key 1c and the days-of-week-number counting mode is set by operation of the "day-number" key 1a and the "weekday" key 1c. Also in this case, the starting point is set at Step B1 by moving the cursor in the similar manner to the mentioned above. If, also in this case, 19th day is designated as a particular day or the starting point, a bar appears under the 19th day as shown in Fig. 5A and "May 19" is displayed at the side portion of the calendar display. The starting point data "May 19" is written into the A-register 31 of the data memory 10 and the count value of the counter 31 of the cursor-control section 3 becomes "19".

At Step B2, the cursor is moved. When a counting operation of number of days-of-week between May 19 and June 1, "↓" key is continuously operated for two times. At first, when "↓" key 1f is operated for the first time, the operation advances through Step B3 to Step B4 and the value "+7" is added to the count value of the counter 31 of the cursor-control section 3. Then, the count values add up to "26" and the operation advances to Step B5. The comparator a compares at Step B5 the count value of the counter 31 and the value of the last day in the month. Since the result of the processing at Step B5 is "NO" in this case, the operation advances to Step B6. The days-of-week counting mode has been set and therefore the result of the processing at Step B6 is "YES". Then the operation advances to Step B10. It is judged at Step B10 whether or not the cursor stays at a holiday position at present. If the result is "YES", the operation returns to Step B9 and the value "+1" is added to the counter 31. But since the result is "NO" in this case, the operation advances to Step B11. At Step B11, in the same manner as the described manner at Step B7, the days-number counting section 11 counts bits of the calendar memory 7 on the basis of the contents of the A-register 101 and the contents of the B-register 102 of the data memory 10.

In the meantime, the bit data read out from the calendar memory 7 are supplied to the holiday-judging section 12, too. The holiday-judging section counts only "1" among the bit data supplied to the holiday judging section 12.

At Step B12, the number of holidays obtained by the holiday-judging section 12 is subtracted from the number of days obtained by the days-number counting section 11 and the result of the subtraction is supplied to the C-register 103. At this time, the content of the C-register 103 becomes "6".

Under this state, when "↓" key 1f is operated again, the result of processing at Step B8 becomes "YES" and the operation returns to Step B3. Then, the operation advances from Step B3 to Step B4. At Step B4, the value "+7" is added to the count value of the counter 31 of the cursor-control section 3 and the count value adds up to "33". Then, since the comparator 9 judges at Step B5 that the count value "33" of the counter 31 is larger than the date value of the last day in the month, the result of the process at Step B5 is "YES" and the operation advances to Step B13. At Step B13, the calendar-formation section 8 supplies calendar data of the following month, calendar data of June in this case to the display buffer 6 and displays the calendar data on the display section 13. Further, the value of the counter 31 is obtained as follows:
"33" - "31" = "2"
and the result "2" is set in the counter 31.

Then the operation advances to Step B6. The result of processing at Step B6 is "YES", so that the operation advances to Step B10. It is judged at Step B10 whether or not the cursor stays at a holiday position at present. Since the result is "NO", the operation advances to Step B11.

At Step B11, the days-number counting section 11 counts bits of the calendar memory 7 on the basis of contents of the A-register 101 and contents of the B-register 102 of the data memory 10 and obtains the number of days. And then the operation advances to Step B12. At Step B12, the days-number counting section 11 subtracts the number of holidays counted by the holiday-judging section 11 from the above number of days. The result of the above subtraction is written into the C-register 103. The content of the C-register 103 at this time is "11" and is displayed on the display section 13 through the display buffer 6. One example of the display on the display section 13 is illustrated in Fig. 5C, where, in addition to the calendar display, "May 19", "June 2" and the result of counting days excluding holidays "11 days" are on display.

### ARRANGEMENT OF APPARATUS WITH TOUCH PANEL

It will be easily understood by those skilled in the art that an input means of a tablet type can be provided on the display section for designating dates on the tablet.

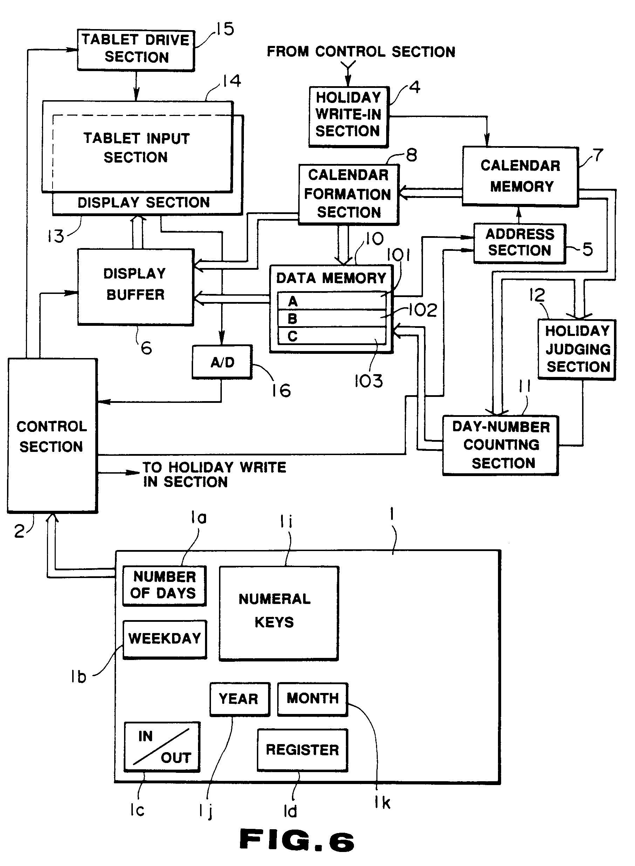

An embodiment of an electronic apparatus employing an input means of a tablet type is illustrated in Fig. 6, in which like components as those in Fig. 1 are designated by like reference symbols. In the embodiment, a transparent touch panel is provided on the display section 13. When an input section 14 of a tablet type which is driven by a tablet driving section 15 is depressed with a finger, a pen tip and the like, a depressed position signal is output to an A/D converter 16. The A/D converter 16 converts depressed position signal into coordinates data and outputs the coordinates data to the control section 2.

Accordingly, when positions on the tablet corresponding to "19" and "27" on the calendar displayed as shown in Fig. 5A are depressed, the control section 2 reads the positions and sends an instruction for designating dates to the address section 5.

As a result, a starting date and a terminating date are stored in the A-register 101 and the B-register 102 of the data memory 10 in the same manner as designated by the cursor, and number of days can be counted in the same way as the described above.

It will be apparently understood from the above description that holidays can be designated by inputting through the tablet.

Further, as described above, the designated date can be indicated not only by an under bar display but also by a blinking display.

## Claims

1. A small-sized electronic apparatus, comprising:
displaying means (13) including a liquid crystal display device of a dot-matrix type for displaying a calendar;
designation means (2,10) for designating a first date and a second date on the calendar displayed by said displaying means; and
counting means (11) for counting the number of days between the first and second dates designated by said designation means,
**characterized by**
further comprising transparent touch-panel input means (14,15) provided on said displaying means (13) for outputting position data, and whereby
said designation means executes the designation responsive to the position data output from the transparent touch-panel input means.

2. A small-sized electronic apparatus according to at least one of the preceding claims, **characterized by** further comprising setting means (4,7) for setting a particular day on the calendar displayed by said displaying means (13).

3. A small-sized electronic apparatus according to claim 2, **characterized in that** said displaying means (13) includes inverse-display means for inversely displaying a particular day set by said setting means (4,7).

4. A small-sized electronic apparatus according to claim 2, **characterized in that** said displaying means (13) comprises calendar-data memory means (7) having memory areas for storing days in each month and data of the particular day set by said setting means (4) being stored at a relevant memory area in said calendar-data memory means.

5. A small-sized electronic apparatus according to at least one of the preceding claims, **characterized in that** said counting means (11) includes means (11,12) for counting the number of days except the particular days between the first and second dates designated by said designation means.

6. A small-sized electronic apparatus according to claim 5, **characterized by** further comprising:
first date display means (6,101) for displaying the first date designated by said designation means in addition to the calendar display;
second date display means (6,102) for displaying the second date designated by said designation means in addition to the calendar display; and
day-number display means (6,103) for displaying day-number counted by said counting means, when the second date is designated by said designation means.

7. A small-sized electronic apparatus according to claim 6, **characterized by** further comprising:
selection means (1b) for selecting whether said counting means counts the number of days except the particular days or number of days including the particular days; and
indication means for indicating the result of the selection made by said selection means.

## Patentansprüche

1. Kleines elektronisches Gerät, das umfaßt:
eine Anzeigeeinrichtung (13), die eine Flüssigkristall-Anzeigevorrichtung des Punktmatrixtyps zur Anzeige eines Kalenders enthält;
eine Kennzeichnungseinrichtung (2, 10) zur Kennzeichnung eines ersten Datums sowie eines zweiten Datums auf dem Kalender, der von der Anzeigeeinrichtung angezeigt wird; und
eine Zähleinrichtung (11) zum Zählen der Anzahl von Tagen zwischen dem ersten und dem zweiten Datum, die von der Kennzeichnungseinrichtung gekennzeichnet werden,
**dadurch gekennzeichnet**, daß
es des weiteren eine transparente Berührungstastatur-Eingabeeinrichtung (14, 15) umfaßt, die an der Anzeigeeinrichtung (13) vorhanden ist und Positionsdaten ausgibt, und wobei
die Kennzeichnungseinrichtung die Kennzeichnung in Reaktion auf den Positionsdatenausgang von der transparenten Berührungstastatur-Eingabeeinrichtung ausführt.

2. Kleines elektronisches Gerät gemäß wenigstens einem der vorangehenden Ansprüche, **dadurch gekennzeichnet**, daß es des weiteren eine Einstelleinrichtung (4, 7) zum Einstellen eines bestimmten Tages auf dem von der Anzeigeeinrichtung (13) angezeigten Kalender umfaßt.

3. Kleines elektronisches Gerät nach Anspruch 2, **dadurch gekennzeichnet**, daß die Anzeigeeinrichtung (13) eine Inversanzeigeeinrichtung zur inversen Anzeige eines von der Einstelleinrichtung (4, 7) eingestellten, bestimmten Tages enthält.

4. Kleines elektronisches Gerät nach Anspruch 2, **dadurch gekennzeichnet**, daß die Anzeigeeinrichtung (13) eine Kalenderdaten-Speichereinrichtung (7) mit Speicherbereichen zur Speicherung von Tagen in jedem Monat umfaßt, und daß Daten des von der Einstelleinrichtung (4) eingestellten, bestimmten Tages in einem betreffenden Speicherbereich in der Kalenderdaten-Speichereinrichtung gespeichert werden.

5. Kleines elektronisches Gerät nach wenigstens einem der vorangehenden Ansprüche, **dadurch gekennzeichnet**, daß die Zähleinrichtung (11) eine Einrichtung (11, 12) zum Zählen der Anzahl von Tagen bis auf die bestimmten Tage zwischen dem ersten und dem zweiten Datum, die von der Kennzeichnungseinrichtung gekennzeichnet werden, enthält.

6. Kleines elektronisches Gerät nach Anspruch 5, **dadurch gekennzeichnet**, daß es des weiteren umfaßt:
eine erste Datumsanzeigeeinrichtung (6, 101) zur Anzeige des ersten von der Kennzeichnungseinrichtung gekennzeichneten Datums zusätzlich zur Kalenderanzeige;
eine zweite Datumsanzeigeeinrichtung (6, 102) zur Anzeige des zweiten von der Kennzeichnungseinrichtung gekennzeichneten Datums zusätzlich zur Kalenderanzeige; und
eine Tagesanzahl-Anzeigeeinrichtung (6, 103) zur Anzeige der durch die Zähleinrichtung gezählten Tagesanzahl, wenn das zweite Datum von der Kennzeichnungseinrichtung gekennzeichnet wird.

7. Kleines elektronisches Gerät nach Anspruch 6, **dadurch gekennzeichnet**, daß es des weiteren umfaßt:
eine Auswahleinrichtung (1b), die auswählt, ob die Zähleinrichtung die Anzahl von Tagen ausschließlich der bestimmten Tage oder die Anzahl von Tagen einschließlich der bestimmten Tage zählt; und
eine Anzeigeeinrichtung, die das Ergebnis der durch die Auswahleinrichtung getroffenen Auswahl anzeigt.

## Revendications

1. Un appareil électronique de petite taille, comprenant :
des moyens d'affichage (13) comprenant un dispositif d'affichage à cristal liquide d'un type à matrice de points, pour afficher un calendrier;
des moyens de désignation (2, 10) pour désigner une première date et une seconde date sur le calendrier qui est affiché par les moyens d'affichage; et
des moyens de comptage (11) pour compter le nombre de jours entre les première et seconde dates qui sont désignées par les moyens de désignation,
caractérisé en ce que
l'appareil comprend en outre des moyens d'entrée à panneau tactile transparent (14, 15) formés sur les moyens d'affichage (13) pour fournir des données de position, et grâce à quoi
les moyens de désignation accomplissent la désignation sous la dépendance des données de position qui sont fournies par les moyens d'entrée à panneau tactile transparent.

2. Un appareil électronique de petite taille selon la revendication précédente, caractérisé en ce qu'il comprend en outre des moyens de fixation (4, 7) pour fixer un jour particulier sur le calendrier qui est affiché par les moyens d'affichage (13).

3. Un appareil électronique de petite taille selon la revendication 2, caractérisé en ce que les moyens d'affichage (13) comprennent des moyens d'affichage avec inversion pour afficher avec inversion un jour particulier qui est fixé par les moyens de fixation (4, 7).

4. Un appareil électronique de petite taille selon la revendication 2, caractérisé en ce que les moyens d'affichage (13) comprennent des moyens de mémoire de données de calendrier (7) ayant des zones de mémoire pour enregistrer des jours de chaque mois, et les données du jour particulier qui est fixé par les moyens de fixation (4) étant enregistrées dans une zone de mémoire appropriée dans les moyens de mémoire de données de calendrier.

5. Un appareil électronique de petite taille selon l'une au moins des revendications précédentes, caractérisé en ce que les moyens de comptage (11) comprennent des moyens (11, 12) pour compter le nombre de jours à l'exception des jours particuliers, entre les première et seconde dates qui sont désignées par les moyens de désignation.

6. Un appareil électronique de petite taille selon la revendication 5, caractérisé en ce qu'il comprend en outre :
des premiers moyens d'affichage de date (6, 101) pour afficher la première date qui est désignée par les moyens de désignation, en plus de l'affichage de calendrier;
des seconds moyens d'affichage de date (6, 102) pour afficher la seconde date qui est désignée par les moyens de désignation, en plus de l'affichage de calendrier; et
des moyens d'affichage de nombre de jours (6, 103) pour afficher le nombre de jours qui est compté par les moyens de comptage, lorsque la seconde date est désignée par les moyens de désignation.

7. Un appareil électronique de petite taille selon la revendication 6, caractérisé en ce qu'il comprend en outre :
des moyens de sélection (1b) pour déterminer si les moyens de comptage comptent le nombre de jours à l'exception des jours particuliers, ou le nombre de jours y compris les jours particuliers;
des moyens d'indication pour indiquer le résultat de la sélection qui est effectuée par les moyens de sélection.
